# EUROPEAN PATENT SPECIFICATION

(11) **EP 1 934 642 B1**
(45) Date of publication and mention of the grant of the patent: **23.05.2012**
(21) Application number: 06794620.2
(22) Date of filing: 03.10.2006
(51) Int. Cl.: G02B 6/28, G01P 15/093

(54) **FIBRE OPTIC PACKAGE AND METHOD OF MAKING THE SAME**
FASEROPTISCHE KAPSELUNG UND VERFAHREN ZU IHRER HERSTELLUNG
ENSEMBLE DE FIBRES OPTIQUES ET SON PROCÉDÉ DE FABRICATION

(30) Priority: 11.10.2005 GB 0520590
(43) Date of publication of application: 25.06.2008
(73) Proprietor: QinetiQ Limited, Farnborough Hampshire GU14 0LX (GB)
(72) Inventor: NASH, Philip, John, Dorset, DT2 8XJ (GB)
(74) Representative: Clarke, Alan
(86) International application number: PCT/GB2006/003668
(87) International publication number: WO 2007/042761

(56) References cited:
- EP-A2- 0 251 632
- WO-A-01/14918
- WO-A-2005/068950
- US-A- 4 635 482
- US-A- 5 071 214
- US-A- 5 329 349
- US-A1- 2005 076 713
- US-A1- 2005 098 675

## Description

The present invention relates to fibre-optic packages and to methods of making fibre-optic packages.

Many types of fibre-optic package comprise a plurality of individual fibre-optic devices which are optically coupled together in series such that an output fibre of one individual fibre-optic device is coupled to an input fibre of another device. For example, two or three fibre-optic accelerometers of a type described in published international application PCT/GB2005/000078 (publication number WO 2005/068950 A1) may be coupled together by reflective couplers to form an accelerometer package for detecting components of acceleration along two or three mutually orthogonal directions.

Packages of this type are typically manufactured by arranging pre-fabricated devices within a package and then optically coupling individual devices together by fusion splicing of input and output fibres. Where another component (e.g. a fibre-coupled mirror) is required to be coupled into the optical path between two devices, two fusion splices are required: one to couple an output fibre of a first device to one end of the component, and a second to couple the other end of the component to an input fibre of a second device. US 5,071,214 and EP 0 251 632 describe arrangements in which use is made of multi-port optical couplers.

Fusion splicing is time consuming, complicated and expensive to carry out on a large scale. Two fibres have to be aligned, for example in a V-groove support, before being fused, for example by an arc. The expense of such splicing accounts for most of the cost of a finished package and this inhibits the commercial viability and take-up of fibre-optic packages in a number of potential applications. A fusion splice is also unreliable over time and a potential failure point in a finished package. Furthermore, fusion splices introduce additional undesirable optical loss. Additionally, the nature of the fusion splicing process is such that the fibres to be joined must be relatively long to allow for multiple failures during splicing and to allow use of fusion splicing machinery. This means that connecting fibres between optically adjacent devices in a package are generally much longer than is necessary for these fibres to perform their function. Excess lengths of fibre must then be stowed within the finished package, resulting in a package size that is unnecessarily large.

It is an object of the invention to ameliorate at least one of these problems.

Aspects of the invention are set out in the accompanying claims

There is described herein a fibre-optic package comprising first and second fibre-optic devices or components having first and second optical fibres respectively, and wherein the first and second fibres are coupled by fused-fibre coupling.

In this specification, "fused-fibre coupling" of two fibres refers to the coupling of the two fibres by joining respective lengths of each fibre together such that, after coupling, a portion of radiation carried in one fibre may pass into the other fibre by evanescent coupling of radiation. Fused-fibre coupling may be achieved in a number of ways, for example by winding the two lengths of fibre around each other and then pulling them in a flame (i.e. fused-taper coupling).

The first and second fibre-optic devices or components according to the present invention are accelerometers. Since the first and second fibres are fused-fibre coupled, they can be of generally of shorter length in the finished package than would be the case if they were fusion spliced. This allows packages of the invention to be of reduced size compared to those in the prior art. The finished package is also more reliable since fused-fibre coupling provides coupling of greater longevity than fusion splicing. This is particularly important where the package is be deployed in inaccessible and/or dangerous environments.

The package may further comprise a third fibre-optic device or component having a third optical fibre wherein the third optical fibre is coupled to either the first optical fibre or to the second optical fibre by fused-fibre coupling. Where a package is required to have a device/component coupled to two other devices/components, this allows further package size reduction and increased reliability compared to prior art packages.

The first and second devices may be respectively first and second fibre-optic accelerometers and the third device a fibre-coupled reflector, the first and second fibres being respectively an output fibre of the first accelerometer and an input fibre of the second accelerometer and the package further comprising a second fibre-coupled reflector fused-fibre coupled to an input fibre of the first accelerometer and a third fibre-coupled reflector fused-fibre coupled to an output fibre of the second accelerometer. This provides a fibre-optic accelerometer package having two individual fibre-optic accelerometers.

To provide an accelerometer package having three individual fibre-optic accelerometers, the package may further comprise a third fibre-optic accelerometer having an input fibre fused-fibre coupled to the output fibre of the second accelerometer such that the third fibre-coupled reflector is coupled to the optical path between the second and third accelerometers, and a fourth fibre-coupled reflector fused-fibre coupled to an output fibre of the third accelerometer. Alternatively, the output fibre of the third accelerometer may be cleaved (or cleaved and then the exposed end silvered) to form a reflective end thereof.

The fibre-optic accelerometers are preferably oriented so as to detect components of acceleration of the package along substantially mutually orthogonal directions.

The fibre-coupled reflector or reflectors may each comprise a length of fibre having a cleaved end, or a cleaved and silvered end.

As a result, a fibre-optic package is provided, the package comprising first and second fibre-optic devices or components having first and second optical fibres respectively, and wherein the first and second fibres are coupled by fused-fibre coupling. The package may further comprise a third fibre-optic device/component directly optically connected to the first device/component by the first optical fibre. This provides the advantage that no coupling of fibres is required to optically connect the first and third devices/components. This may be achieved by fabricating the first and third devices together using a single length of optical fibre to form the first and third devices as well as the optical fibre connecting them.

The first and third devices may be respectively first and second fibre-optic accelerometers and the second device a fibre-coupled reflector, the package further comprising a second fibre-coupled reflector fused-fibre coupled to an input fibre of the first accelerometer and a third fibre-coupled reflector fused-fibre coupled to an output fibre of the second accelerometer. The first and second accelerometers may be formed using a single optical fibre.

To provide an accelerometer package having three individual fibre-optic accelerometers, a third fibre-optic accelerometer may be directly optically connected to the output fibre of the second accelerometer and a fourth fibre-coupled reflector fused-fibre coupled to an output fibre of the third accelerometer. For example, the three individual fibre-optic accelerometers may be formed with a single optical fibre. Instead of providing a fourth fibre-coupled reflector, the output fibre of the third accelerometer may be cleaved (or cleaved and then the exposed end silvered) to form a reflective end thereof.

The fibre-optic accelerometers are preferably oriented so as to detect components of acceleration of the package along substantially mutually orthogonal directions.

The fibre-coupled reflector or reflectors may each comprise a length of fibre having a cleaved end, or a cleaved and silvered end.

The method may comprise the steps of:
(i) forming first, second and third individual fibre-optic accelerometers from a single optical fibre;
(ii) fused-fibre coupling a first fibre-coupled reflector to the fibre between the first and second accelerometers;
(iii) fused-fibre coupling a second fibre-coupled reflector to the fibre between the second and third accelerometers;
(iv) fused-fibre coupling a third fibre-coupled reflector to the fibre at an input of the first accelerometer; and
(v) fused-fibre coupling a fourth fibre-coupled reflector to the fibre at an output of the third accelerometer,
thus forming an accelerometer package.

The step of coupling two fibres may be effected by fused-taper coupling, i.e. by twisting a length of one of the fibres around a length of the other and heating the region in which the fibres overlap to form a coupled region. The coupled region is preferably packaged itself.

Embodiments of the invention are described below by way of example only and with reference to the accompanying drawings in which:
- Figures 1 to 4: illustrates stages in manufacture of a fibre-optic accelerometer package of the prior art;
- Figures 5 to 8: illustrate stages in manufacture of a first example fibre-optic accelerometer package of the invention;
- Figures 9 to 11: illustrate stages in manufacture of a comparative example fibre-optic accelerometer package ; and
- Figure 12 to 14: illustrate stages in manufacture of a comparative example fibre-optic accelerometer package.

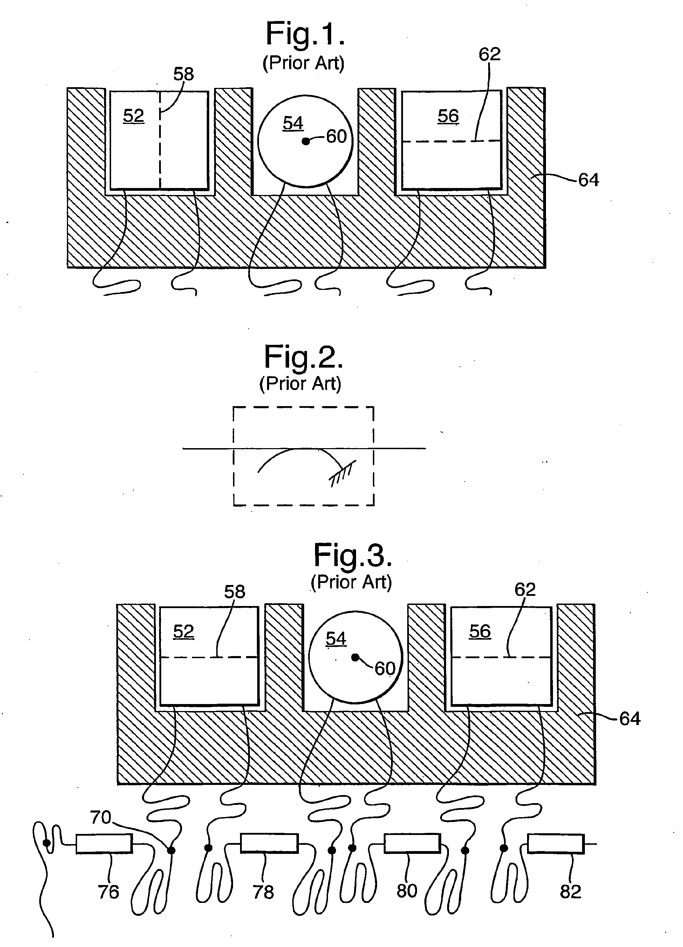

Figure 1 shows a stage in construction of a fibre-optic accelerometer package of the prior art. Three individual fibre-optic accelerometers 52, 54, 56 of a type having a coil of optical fibre are placed in a support cradle 64. Respective axes 58, 60, 62 of the coils of the accelerometers are substantially mutually perpendicular. Four pre-fabricated reflective couplers 76, 78, 80, 82, each having the structure shown in Figure 2, are connected to input and output fibres of the individual accelerometers 52, 54, 56 as shown in Figure 3. This is achieved by seven fusion splices such as 70. Substantial excess lengths of fibre connecting each reflection coupler to adjacent accelerometers are required to allow for multiple failures of the fusion splices and to allow use of fusion splicing apparatus.

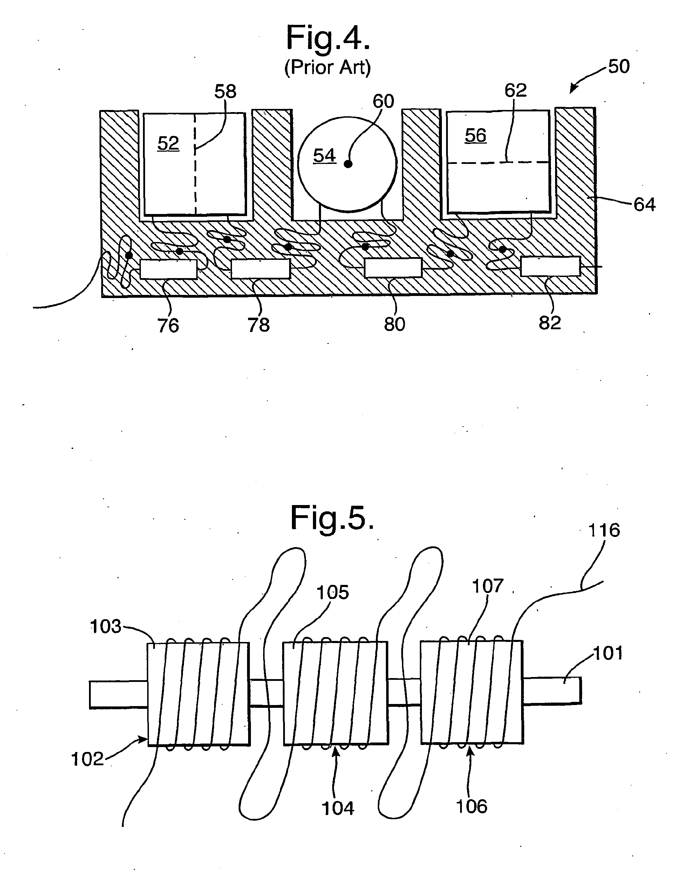

As shown in Figure 4,the reflection couplers 76, 78, 80, 82.and the connecting fibres are then stowed in the cradle during formation of the finished accelerometer package 50.

Referring to Figure 5, a three-component accelerometer is formed by winding a single optical fibre 116 onto each of three hollow cylindrical formers 103, 105, 107 which are mounted on a temporary support bar 101. The wound formers are then finished to produce three individual fibre-optic accelerometers 102, 104, 106 having a single fibre 116 connecting them and forming their respective detection coils. Alternatively, the formers may be removed from the support bar 101 before being finished to produce completed accelerometers. A suitable example architecture for the accelerometers 102, 104, 106 is described in published international application PCT/GB2005/000078 (publication number WO 2005/068950 A1).

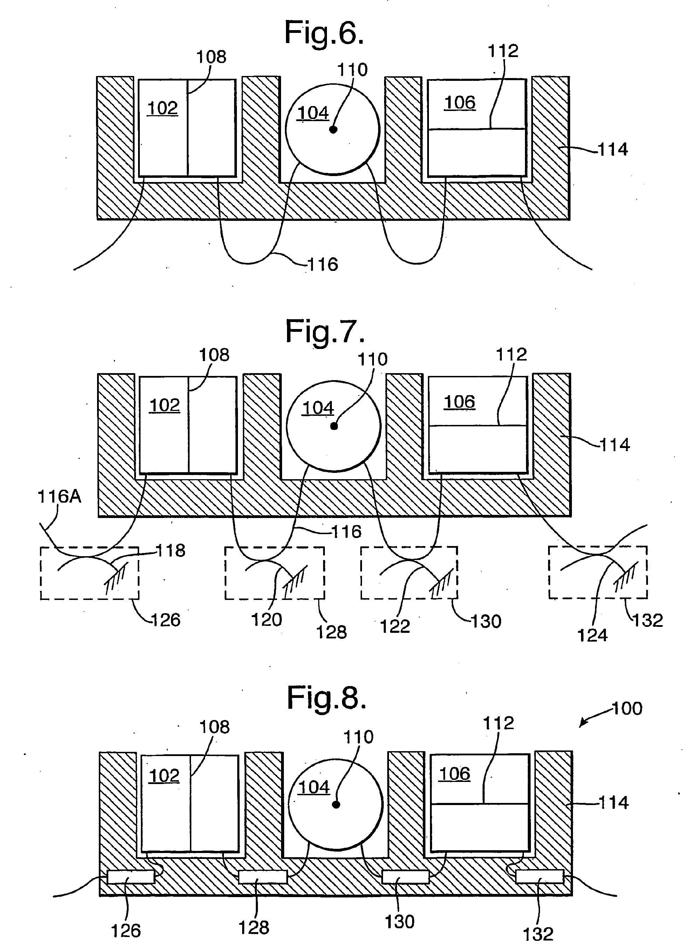

Referring to Figure 6, the individual accelerometers are fixedly mounted within a support cradle 114, such that their axes are substantially mutually perpendicular. This allows the finished package to detect components of acceleration of the package along three substantially mutually perpendicular directions.

Referring to Figure 7, four fibre coupled reflectors 118, 120, 122, 124 are then coupled to the fibre 116 near the ends thereof and at the portions thereof connecting optically adjacent accelerometers by means of fused-fibre coupling. To achieve this, a portion of the fibre of a fibre-coupled reflector is wound around, or otherwise located adjacent to, a portion of the fibre 116 to which it is to be coupled, and heated, for example by a flame. Each fibre-coupled reflector may be formed for example by careful cleaving of an end of a fibre, and possibly also silvering the end.

The fibre coupled reflectors 118, 120, 122, 124 and the portions of the fibre 116 to which they are attached are then individually packaged to form sub-packages 126, 128, 130, 132 which are stowed within the cradle 114 to form a substantially finished fibre-optic accelerometer package 100 of the invention, as illustrated in Figure 8.

Coupling of the fibre-coupled reflectors 118, 120, 122, 124 in the orientation shown in Figure 7 defines end 116A of fibre 116 as the input end of the finished fibre-optic accelerometer package 100.

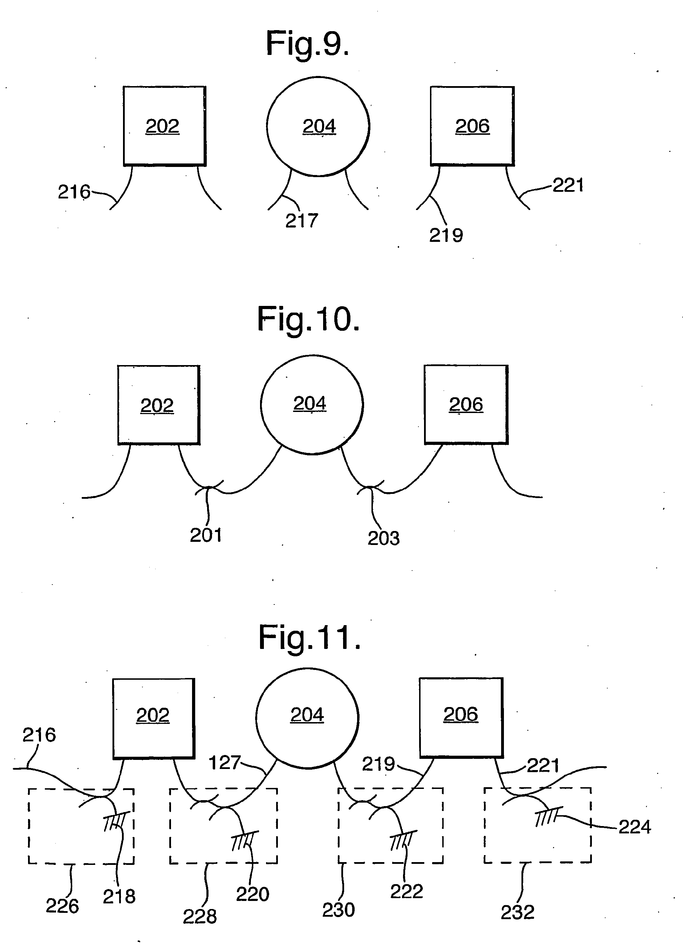

Figures 9 to 11 show stages in manufacture of a comparative example fibre-optic accelerometer package.

Referring to Figure 9, three individual fibre-optic accelerometers 202, 204, 206 are arranged in support cradle (not shown) with their detection axes (not shown) substantially mutually perpendicular. As shown in Figure 10, input and output fibres of adjacent accelerometers are coupled by fused-fibre coupling at 201 and 203.

Referring to Figure 11, fibre-coupled reflectors 218, 220, 222 are coupled to first ends 216, 217, 219 of the fibre of accelerometers 202, 204, 206 respectively by fused-fibre coupling. A fibre-coupled reflector 224 is coupled to a second end 221 of the fibre of accelerometer 226, also by fused-fibre coupling. The fibre-coupled reflectors 218, 220, 222, 224 and respective neighbouring coupled sections of fibre are then packaged to form sub-packages 226, 228, 230, 232 which are stowed within the accelerometer package.

The orientation of fibre-coupled mirrors 218, 220, 222, 224 defines fibre 216 as the input fibre of the finished accelerometer package.

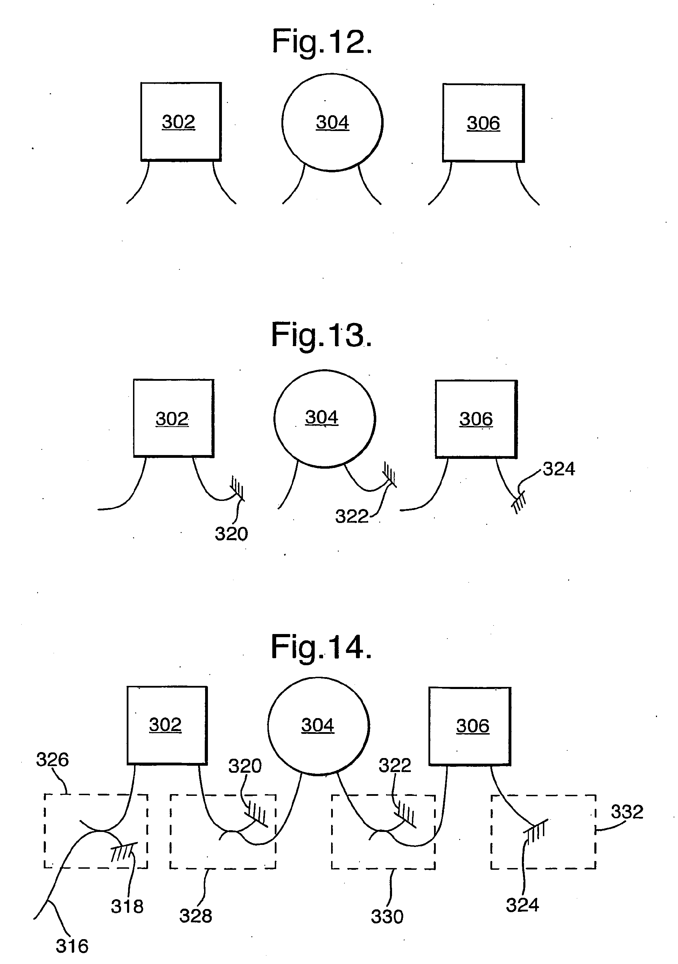

Figure 12 to 14 shows stages in manufacture of a comparative example fibre-optic accelerometer package. Individual fibre-optic accelerometers 302, 304, 306 are fixedly mounted in a support cradle (not shown) with their axes substantially mutually perpendicular (Figure 12). As shown in Figure 13, one end of the optical fibre of each accelerometer 302, 304, 306 is cleaved (and possibly also silvered) to form reflectors 320, 322, 324. Referring to Figure 14, adjacent accelerometers are then coupled by fused-fibre coupling, and a fibre-coupled reflector 318 is also coupled to the free end of the fibre of accelerometer 302 by fused-fibre coupling. Fibre 316 is the input fibre for the finished accelerometer package. Coupled regions of the fibres and adjacent reflectors, and also reflector 324, are then formed into sub-packages 326, 328, 330, 332 and stowed in the finished fibre-optic accelerometer package.

## Claims

1. A method of forming a package comprising two or more accelerometers connected in an array with one or more fibre optic connecting portions extending between accelerometers, wherein said connecting portions do not have fusion splices, and form part of a single continuous fibre extending through the array, said method comprising coupling one or more reflectors onto said single continuous fibre by performing a fused taper coupling on a fibre optic connecting portion extending between connected accelerometers.

2. A method according to Claim 1, comprising the steps of:
(i) forming first, second and third individual fibre-optic accelerometers from a single optical fibre;
(ii) fused-fibre coupling a first fibre-coupled reflector to the fibre between the first and second accelerometers;
(iii) fused-fibre coupling a second fibre-coupled reflector to the fibre between the second and third accelerometers;
(iv) fused-fibre coupling a third fibre-coupled reflector to the fibre at an input of the first accelerometer; and
(v) fused-fibre coupling a fourth fibre-coupled reflector to the fibre at an output of the third accelerometer.

3. A method according to Claim 1 or Claim 2, wherein two fibres are fused-fibre coupled by the steps of twisting a length of one of the fibres around a length of the other and heating the region in which the fibres overlap to form a coupled region.

4. A method according to Claim 3, further comprising the step of packaging the coupled region of the fibres.

5. A method according to Claim 1, wherein a second fibre-coupled reflector is fused-fibre coupled to an input fibre of a first accelerometer and a third fibre-coupled reflector is fused-fibre coupled to an output fibre of a second accelerometer.

6. A method according to Claim 5, further comprising optically connecting a third fibre-optic accelerometer to the output fibre of the second accelerometer and fused-fibre coupling a fourth fibre-coupled reflector to an output fibre of the third accelerometer.

7. A method according to Claim 5 or Claim 6, further comprising the step of orienting the accelerometers so as to detect components of acceleration of the package along substantially mutually orthogonal directions.

8. A method according to any one of Claims 5 to 7, wherein each fibre-coupled reflector comprises an optical fibre and cleaving an end of said fibre to provide reflection of radiation within the optical fibre.

## Patentansprüche

1. Verfahren zum Erstellen einer Baugruppe mit zwei oder mehr in einer Anordnung verbundenen Beschleunigungsaufnehmern, wobei sich zwischen den Beschleunigungsaufnehmern ein oder mehrere faseroptische Verbindungsteile erstrecken, und wobei die Verbindungsteile keine Schmelzspleiße aufweisen und Teil einer sich durch die Anordnung erstreckenden, einzelnen, durchgehenden Faser bilden, und wobei das Verfahren ein Ankoppeln von einem oder mehreren Reflektoren an die einzelne, durchgehende Faser aufweist, indem eine sich zwischen verbundenen Beschleunigungsaufnehmern erstreckende faseroptischen Verbindungsstelle mit einer Taper-Schmelzkopplung versehen wird.

2. Verfahren nach Anspruch 1, das Schritte umfasst zum:
(i) Erstellen eines ersten, zweiten und dritten einzelnen faseroptischen Beschleunigungsaufnehmers aus einer einzigen optischen Faser;
(ii) Koppeln eines ersten fasergekoppelten Reflektors mittels Faserschmelzen an die Faser zwischen dem ersten und dem zweiten Beschleunigungsaufnehmer;
(iii) Koppeln eines zweiten fasergekoppelten Reflektors mittels Faserschmelzen an die Faser zwischen dem zweiten und dem dritten Beschleunigungsaufnehmer;
(iv) Koppeln eines dritten fasergekoppelten Reflektors mittels Faserschmelzen an die Faser an einem Eingang des ersten Beschleunigungsaufnehmers; und
(v) Koppeln eines vierten fasergekoppelten Reflektors mittels Faserschmelzen an die Faser an einem Ausgang des dritten Beschleunigungsaufnehmers.

3. Verfahren nach Anspruch 1 oder Anspruch 2, worin das Koppeln zweier Fasern durch Faserschmelzen mittels Schritten zum Wickeln eines Teils von einer der Fasern um einen Teil der anderen der Fasern und, um einen Koppelbereich auszubilden, zum Erhitzen des Bereichs, in dem sich die Fasern überdecken, erfolgt.

4. Verfahren nach Anspruch 3, das ferner einen Schritt zum Aufnehmen der Faserkoppelbereiche in ein Gehäuse umfasst.

5. Verfahren nach Anspruch 1, worin ein zweiter fasergekoppelter Reflektor mittels Faserschmelzen an eine Eingangsfaser eines ersten Beschleunigungsaufnehmers angekoppelt wird und ein dritter fasergekoppelter Reflektor mittels Faserschmelzen an eine Ausgangsfaser eines zweiten Beschleunigungsaufnehmers angekoppelt wird.

6. Verfahren nach Anspruch 5, das ferner ein optisches Verbinden eines dritten faseroptischen Beschleunigungsaufnehmers mit der Ausgangsfaser des zweiten Beschleunigungsaufnehmers und ein Ankoppeln eines vierten fasergekoppelten Reflektors an eine Ausgangsfaser des dritten Beschleunigungsaufnehmers durch Faserschmelzen umfasst.

7. Verfahren nach Anspruch 5 oder Anspruch 6, das ferner einen Schritt zum Ausrichten der Beschleunigungsaufnehmer derart umfasst, dass Beschleunigungskomponenten der Baugruppe entlang von im Wesentlichen zueinander orthogonalen Richtungen erfasst werden.

8. Verfahren nach einem der Ansprüche 5 bis 7, worin jeder der fasergekoppelten Reflektoren eine optische Faser aufweist und ein Ende der Faser zum Ermöglichen einer Reflexion von Strahlung innerhalb der optischen Faser gespalten wird.

## Revendications

1. Procédé de fabrication d'un boîtier comprenant deux accéléromètres ou plus raccordés en une matrice avec une ou plusieurs portions de connexion de fibres optiques s'étendant entre les accéléromètres, dans lequel lesdites portions de connexion n'ont pas d'épissure par fusion et font partie d'une unique fibre continue s'étendant à travers la matrice, ledit procédé comprenant un couplage d'un ou plusieurs réflecteurs sur ladite unique fibre continue en exécutant un couplage conique par fusion sur une portion de connexion de fibres optiques s'étendant entre les accéléromètres raccordés.

2. Procédé selon la revendication 1, comprenant les étapes consistant à :
(i) former des premier, deuxième et troisième accéléromètres individuels à fibres optiques à partir d'une unique fibre optique ;
(ii) coupler par fusion de fibres un premier réflecteur couplé par fibres à la fibre entre les premier et deuxième accéléromètres ;
(iii) coupler par fusion de fibres un deuxième réflecteur couplé par fibres à la fibre entre les deuxième et troisième accéléromètres ;
(iv) coupler par fusion de fibres un troisième réflecteur couplé par fibres à la fibre d'une entrée du premier accéléromètre ; et
(v) coupler par fusion de fibres un quatrième réflecteur couplé par fibres à la fibre d'une sortie du troisième accéléromètre.

3. Procédé selon la revendication 1 ou la revendication 2, dans lequel deux fibres sont couplées par fusion de fibres lors des étapes consistant à tordre une longueur de l'une des fibres autour d'une longueur de l'autre fibre et à chauffer la région dans laquelle les fibres se chevauchent pour former une région couplée.

4. Procédé selon la revendication 3, comprenant en outre l'étape consistant à mettre sous boîtier la région couplée des fibres.

5. Procédé selon la revendication 1, dans lequel un deuxième réflecteur couplé par fibres est couplé par fusion de fibres à une fibre d'entrée du premier accéléromètre et un troisième réflecteur couplé par fibres est couplé par fusion de fibres à une fibre de sortie du deuxième accéléromètre.

6. Procédé selon la revendication 5, comprenant en outre une connexion optique d'un troisième accéléromètre à fibres optiques à la fibre de sortie du deuxième accéléromètre et un couplage par fusion de fibres d'un quatrième réflecteur couplé par fibres à une fibre de sortie du troisième accéléromètre.

7. Procédé selon la revendication 5 ou la revendication 6, comprenant en outre l'étape d'orientation des accéléromètres de manière à détecter des composantes d'accélération du boîtier le long de directions sensiblement mutuellement orthogonales.

8. Procédé selon l'une quelconque des revendications 5 à 7, dans lequel chaque réflecteur couplé par fibres comprend une fibre optique et dans lequel une extrémité de ladite fibre est coupée pour fournir une réflexion du rayonnement au sein de la fibre optique.
